# EUROPEAN PATENT APPLICATION

(11) **EP 3 502 533 A1**
(43) Date of publication of application: **26.06.2019**
(21) Application number: 17382872.4
(22) Date of filing: 20.12.2017
(51) Int. Cl.: F16L 1/12

(54) **DEVICE FOR PROTECTING A LINE IN AN OPENING AND METHOD FOR INSERTING A LINE IN AN OPENING IN A PROTECTED MANNER**

(71) Applicant: Fundación Tecnalia Research & Innovation, 20009 Donostia-San Sebastian, Guipuzcoa (ES)
(72) Inventor: BERQUE, Joannes, 48160 Derio Bizkaia (ES); RICO RUBIO, Antonio, 48160 Derio Bizkaia (ES); SELLNER, Jan, 48160 Derio Bizkaia (ES); NAVA, Vincenzo, 48009 Bilbao, Basque Country (ES); VILLATE MARTÍNEZ, José Luis, 48160 Derio Bizkaia (ES)
(74) Representative: Balder IP Law, S.L.

(57) **Abstract**

A device (100-103) for protecting a line (50) comprising: a tubular body (110) adapted to receive the line and to insert the tubular body in an opening (25,29) in a first direction (70), the tubular body comprising a first end and a second end; and retention means (115,201-205) coupled to the tubular body; the retention means are adapted to prevent the movement of the tubular body in the opening in a second direction (75) when the tubular body receives the line, the second direction being opposite the first direction; and the retention means (115,201-205) are also adapted to enable the movement of the tubular body (110) in the opening (25,29) at least in the second direction (75) when the tubular body does not receive the line (50). And a method for inserting a line (50) in an opening (25,29) of an installation (10).

## Description

### TECHNICAL FIELD

The present invention relates to the field of line protection, and more specifically, the invention relates to a device for protecting a line that can be inserted in an opening, and a method for inserting a line in an opening in a protected manner.

### BACKGROUND OF THE INVENTION

Lines are elements that are commonly used to transport, transfer and/or transmit substances, materials, energy and/or data. In this regard, a line is an elongated and flexible element, such as a cable or conduit, and can contain several cables or conduits wrapped in layers, for example.

In order to prevent the lines from deteriorating and breaking, they are normally completely buried, or at least a portion thereof, in the ground. The ends of the lines are connected to other lines or to connection points of installations, in which case at least a portion of the lines is buried and another portion of the lines can be raised to reach a connection point (when the latter is not underground). The transition from one portion to another can be such that the line must be curved or bent in order to reach the connection point. The curve or bend (or the curves or bends, since there can be several) can affect the integrity of the line since it causes stress on the line. In addition, depending on the conditions in the area where this transition is located, for example air currents, vibrations or sea currents (if the line is a submarine line buried in the sea floor), the line can move and, as a result, be damaged upon colliding with or rubbing against surfaces or obstacles that are nearby.

Furthermore, the portion of the line that is raised to reach the connection point is sometimes first inserted in an opening that provides access to the connection point, for example, an opening formed the installation structure to which the line is to be connected. The surface on which the opening itself is found can also rub or even curve and/or bend the line, thereby creating additional stress that affects the integrity of the line.

Devices that serve to protect a line that is inserted in an opening are known in the state of the art.

For example, patent document GB-2463940-A describes a protection device for an elongate flexible member that passes through an opening. The device comprises a body that can be inserted in the opening through which the elongate flexible member passes, and means for preventing the body from being removed once the latter is inserted in the opening. Said means comprise, on the outside thereof, elements that protrude and which carry out the locking in the opening.

The patent document WO-2016128739-A1 also describes a device for receiving an elongated and flexible element that must be inserted in the wall of a structure. The device comprises a body that receives the elongated and flexible element, and a member assembly coupled to springs to prevent the removal of the body once the latter is inserted in the wall.

None of the solutions known enable the simple installation of the protection device and the line, or the simple removal of the protection device when it must be changed, removed or used again to insert a new line (for example, to replace a damaged line).

These capabilities are preferable for carrying out the installation, maintenance and removal tasks, which is reflected in a lower cost when carrying out these tasks. In addition, all this is even more preferable when the installation and insertion of a line in an opening must be carried out underwater, for example, when carrying out the cabling of an offshore wind farm (particularly when inserting lines in the foundations of wind turbines) since the tasks are more complex and costly in these conditions, as well as more dangerous when divers carry them out.

### DESCRIPTION OF THE INVENTION

A first aspect of the invention presents a device for protecting a line comprising:
a tubular body adapted to receive the line and to insert the tubular body in an opening in a first direction, the tubular body comprising a first end and a second end; and
retention means coupled to the tubular body;
the retention means are adapted to prevent the movement of the tubular body in the opening in a second direction when the tubular body receives the line, the second direction being opposite the first direction; and
the retention means are also adapted to enable the movement of the tubular body in the opening at least in the second direction when the tubular body does not receive the line.

The device is adapted to be inserted in the opening in the first direction such that the tubular body is inserted in the opening by, for example, the first end thereof. In order to protect the line that can be inserted in the device, the device must be partially inserted through the opening, that is, the tubular body must be partially inserted through the opening, in this way a first portion of the tubular body (and therefore of the device) is inserted through the opening and a second portion of the tubular body (and therefore of the device) is not inserted through the opening.

Upon inserting the line in the device when the tubular body is in the opening as indicated, the retention means come into contact with the line, which actuates the retention means that in turn prevent the movement of the tubular body (and therefore of the device) in the second direction.

The retention means are also adapted to enable the movement of the tubular body in the opening in the first direction such that the tubular body (and therefore the device) can be partially inserted in the opening. Or in other words, the retention means are also adapted to prevent the complete insertion of the tubular body in the opening in the first direction. The retention means may comprise one or more locking stops that protrude from the tubular body. The one or more locking stops limit the insertion of the tubular body and, therefore, of the device in the first direction so that only a portion thereof can be inserted through the opening. The total diameter of the cross section of the tubular body together with the one or more locking stops is greater than the diameter of the opening. Therefore, the portion of the tubular body that can be inserted through the opening is that comprised from the end of the device that is inserted through the opening to the position in which the one or more locking stops are arranged. The partial insertion of the tubular body in the opening can be carried out when the tubular body receives the line, as well as when it does not receive it, since the locking stops are not actuated by the line.

In the context of the present disclosure, the first direction is also referred to as the insertion direction (of the tubular body and, therefore, of the device), and the second direction is also referred to as the removal direction (of the body and, therefore, of the device).

In some embodiments, the retention means comprise one or more pivotable stops; and each of the one or more pivotable stops pivots to a first position that prevents the movement of the tubular body in the opening in the second direction when the tubular body receives the line.

Each of the one or more pivotable stops has at least one portion adapted to come into contact with the line when it is received in the tubular body. For this purpose, the at least one portion of each pivotable stop is in the tubular body to come into contact with the line.

Upon each pivotable stop coming into contact with the line, each pivotable stop rotates about the corresponding pivot thereof such that at least one portion of the stop is pushed outwards from the tubular body, thereby protruding from the tubular body. While each of the one or more pivotable stops protrudes, upon attempting to remove the device from the opening in the removal direction, each pivotable stop comes into contact with a surface on which the opening is formed (a total diameter of the cross section of the tubular body together with each pivotable stop when it protrudes is greater than a diameter of the opening); this surface can be, for example, the foundation of a wind turbine and in which at least one opening has been made in order to pass the line and the line protection device through.

In some embodiments, each of the one or more pivotable stops comprises a spring that keeps the pivotable stop in a second position that enables the movement of the tubular body in the opening at least in the second direction when the tubular body does not receive the line.

The spring of each pivotable stop is adapted to work under compression, that is, after withstanding a compression stress, the spring returns to its initial condition. The spring of each pivotable stop retains the pivotable stop so that at least one portion of the same remains inside the tubular body and comes into contact with the line when it is received in the tubular body.

When the line is removed from the tubular body, each pivotable stop that was in the first position is moved to the second position by means of the spring. Given that each pivotable stop does not protrude from the tubular body when it is kept in the second position, none of the pivotable stops come into contact with the surface on which the opening is formed, thereby enabling the movement of the tubular body and, therefore, of the device in the second direction, and in some cases also in the first direction. This in turn makes it possible to remove the device once the line has been removed from the tubular body.

In some embodiments, the retention means comprise one or more elements with at least one frustoconical portion adapted to prevent the movement of the tubular body in the opening in the second direction when the frustoconical portion is completely inserted in the opening and the tubular body receives the line.

Each of the one or more elements has at least one frustoconical-shaped portion in the outer part of the element. The increase in cross section of the at least one frustoconical portion is in a direction parallel to a longitudinal axis of the tubular body. The maximum diameter of the at least one frustoconical portion is less than or equal to the opening such that the at least one portion can be completely inserted through the opening. When the latter is completely inserted, upon receiving the line in the tubular body, the weight of the line facilitates the lowering of the device.

Despite the fact that the maximum diameter of the at least one frustoconical portion is less than or equal to the opening, the device fits into the opening and prevents the movement of the tubular body in the second direction until the line is removed from the inside of the device. Once the line is removed, the weight thereof is no longer supported by the device, which means that the lifting of the device and the movement of the tubular body in the opening at least in the removal direction is facilitated.

In some embodiments, the device further comprises a first cable; a first end of the first cable is adapted to connect to the line; and the first cable at least extends through the inside of the tubular body from the first end of the tubular body to the second end of the tubular body.

A length of the first cable is greater than a length of the tubular body, which makes it possible for the first cable to pass through the inside of the tubular body from the first end to the second end and still have a portion of the first cable that protrudes from the first end of the tubular body, and have another portion of the first cable that protrudes from the second end of the tubular body.

The first cable can be pulled from the second end thereof at least when the first cable is connected to the line to be protected, which may not be inserted in the device. When the first cable is pulled, the same is removed from the tubular device, while at the same time the line is inserted through the tubular device. When a portion of the line is completely inserted in the tubular body, that is, when there is line (a portion of the line) inserted throughout the tubular body, the first cable can be disconnected from the line and removed from the device. Moreover, the first cable makes it possible to insert the line even when the protection device has already been inserted through the opening, therefore meaning that the handling of the device, as well as the handling of the line, can be carried out separately, making the installation tasks easier, especially when both are in a marine environment and underwater.

The second end of the first cable can be adapted to connect to another cable, such as for example, a messenger cable known in the state of the art. When the first cable is connected to the messenger cable, pulling the messenger cable also pulls the first cable. The use of the messenger cable can further facilitate the insertion of the line in the device since the end of the messenger cable that is not connected to the first cable can be pre-installed in the opening, thus enabling it to be pulled from a different location.

In some embodiments, the retention means are also adapted to retain the first cable in the tubular body until the tubular body is inserted in the opening.

The retention means, by means of the one or more locking stops, retain the first cable in the tubular body until the one or more locking stops comes into contact with and presses on the surface on which the opening is formed. In some of these embodiments, the retention means further comprise, for each of the one or more locking stops, a support element and a spring. The spring is coupled at a first end to the support element, and at a second end to the corresponding locking stop. The spring is adapted to work under compression, that is, after withstanding a compression stress, the spring returns to its initial condition. The one or more locking stops is mobile and adapted to slide on the surface of the tubular body.

One or more retention cables are connected to the first cable and, in a removable manner, to a locking stop. The one or more retention cables prevents the first cable from being removed from the device while it is connected to the locking stop, that is, retained by the locking stop. When the one or more locking stops come into contact with the surface on which the opening is formed during the insertion of the device in the opening, the one or more locking stops moves on the surface of the tubular body while it compresses the corresponding spring. The one or more locking stops can slide until the spring prevents it due to the force that it produces in order to try to return to its initial condition or until it makes contact with the support element, which is fixed in the tubular body. As the one or more locking stops slides, the one or more retention cables is released from the one or more locking stops making the movement of the first cable to which the one or more retention cables is connected possible.

When the first cable is pulled while it is retained by the retention means, the first cable pulls the device, and also the line if it is connected to the first end of the first cable. Upon pulling the device, it may be inserted in the opening. Upon inserting the device in the opening, when the one or more locking stops of the retention means comes into contact with the surface on which the opening is formed, the one or more locking stops moves and releases the first cable. Therefore, by pulling the first cable again, the line is inserted (the line being connected to the first cable) in the tubular body since the tubular body has already been inserted up to where the one or more locking stops enables.

In some other embodiments, the one or more retention cables are attached to the tubular body and are adapted to be broken when they are pulled with a force greater than a predetermined value.

In some embodiments, the tubular body comprises an attachment point for a second cable.

A second cable can be used to be attached to the tubular body and insert the tubular body and, therefore, the device in the opening by pulling the second cable. The second cable can form part of the installation that has an opening through which the line is to be inserted. In this case, the second cable passes through the opening, such that if a first end of the second cable is intended to be attached to the attachment point, the tubular body is inserted in the opening by pulling the second cable, for example from a second end thereof.

In some embodiments, the device further comprises the second cable, the second cable being attached to the attachment point and adapted to be pulled.

If an end (not attached to the device) of the second cable is passed through the opening, by pulling this free end it is possible to insert the device through the opening, regardless of whether or not the line is connected to the first cable, given that the device is pulled when the second cable is pulled.

The end of the second cable can be adapted to connect to another cable, such as for example, a messenger cable known in the state of the art. When the second cable is connected to the messenger cable, pulling the messenger cable also pulls the second cable. The use of the messenger cable can further facilitate the insertion of the device in the opening since the end of the messenger cable that is not connected to the second cable can be pre-installed in the opening, thus enabling it to be pulled from another location.

In some embodiments, the device further comprises a (first) tubular line protector (e.g. a bend restrictor, a bend stiffener or an anti-friction protector known in the state of the art) adapted to receive the line, the (first) tubular protector being coupled to the first end of the tubular body. In some embodiments, the device further comprises a (first or second) tubular line protector (e.g. a bend restrictor, a bend stiffener or an anti-friction protector known in the state of the art) adapted to receive the line, the (first or second) tubular protector being coupled to the second end of the tubular body.

The first and/or second tubular line protectors prevent(s) the line from being excessively curved or bent or that the friction with the sea floor or with other bodies may damage the line in the portion or portions of the line that is/are housed inside the tubular protector or tubular protectors.

In some embodiments, the device for protecting a line is a submersible device.

In some embodiments, the line is a submarine line.

A second aspect of the invention presents a system comprising:
an installation comprising an opening; and
a device for protecting a line according to the first aspect of the invention, the device being partially inserted in the opening of the installation.

In some embodiments, the installation is an installation in a marine environment.

In some embodiments, the installation comprises a wind turbine, the wind turbine comprising a foundation comprising the opening.

Advantages similar to those described for the first aspect of the invention are also applicable to the second aspect of the invention.

A third aspect of the invention presents a method for inserting a line in an opening of an installation comprising:
providing a device for protecting the line, the device comprising:
   a tubular body adapted to receive the line to insert the tubular body in the opening in a first direction; and
   retention means coupled to the tubular device, the retention means being adapted to prevent the movement of the tubular body in the opening in a second direction when the tubular body receives the line, and also adapted to enable the movement of the tubular body in the opening at least in the second direction when the tubular body does not receive the line, the second direction being opposite the first direction;
inserting the device in the opening in the first direction; and
inserting the line in the device when the device is inserted in the opening, the line actuating the retention means to prevent the movement of the tubular body in the second direction.

The insertion of the line in the opening is carried out by inserting the line in the device for protecting the line, which is inserted in the opening.

The device is inserted in the opening when the device still has not received the line therein, at least completely, that is, when the line is not comprised in the entire length of the device. Given that the retention means are actuated when the tubular body receives the line, at least one portion in which the retention means are arranged is inserted in the opening in the first direction. Once the at least one portion is inserted in the opening, the line is inserted in the tubular body and it actuates on the retention means to prevent the movement of the tubular body and, therefore, of the device in the second direction.

The retention means are also adapted to enable the movement of the tubular body in the opening in the first direction such that the tubular body (and therefore the device) can be partially inserted in the opening. Or in other words, the retention means are also adapted to prevent the complete insertion of the tubular body in the opening in the first direction. The retention means may comprise one or more locking stops that protrude from the tubular body. The one or more locking stops limit the insertion of the tubular body and, therefore, of the device in the first direction so that only a portion of these can be inserted through the opening. In this way, in the step of inserting the device in the opening in the first direction, a portion of the device is inserted in the opening in the first direction, where the portion of the device comprises a portion of the tubular body comprised from a first end of the tubular body to the position where the one or more locking stops of the retention means are arranged.

In some embodiments, the method further comprises: connecting a first end of a first cable to the line; and connecting a second cable to a second end of the first cable; the device further comprises the first cable, the first cable passing through the tubular body; the installation further comprises the second cable, the second cable passing through the opening; and the step of inserting the line in the device comprises pulling the second cable in order to insert the line in the device when the device is inserted in the opening, the line actuating the retention means to prevent the movement of the tubular body in the second direction.

The connection of the first cable both to the line and the second cable (e.g. a messenger cable known in the state of the art) facilitates the insertion of the line in the device since this step can be carried out by pulling the second cable. This means that one or more divers or submersible devices are not needed to carry out the step of inserting the line in the device when the device is inserted in the opening.

In some embodiments, the method further comprises connecting the first cable to the retention means in a removable manner; the retention means are also adapted to retain the first cable in the tubular body until the tubular body is inserted in the opening; the step of inserting the device in the opening in the first direction comprises pulling the second cable in order to insert the device in the opening in the first direction until the retention means come into contact with the opening and the first cable disconnects from the retention means.

The connection of the first cable to the line, to the second cable and to the device (by means of the retention means) first facilitates the insertion of the device in the opening and, second, the insertion of the line in the device since these steps can be carried out sequentially by pulling the second cable. When the retention means release the first cable, which takes place once the device has been inserted through the opening by pulling the second cable, pulling the second cable again causes the line to be inserted in the device.

The first cable can be connected to the device at least at one point between a first end and a second end of the first cable. For this purpose, the retention means comprise one or more locking stops that retain the first cable in the tubular body, as well as a support element and a spring for each of the one or more locking stops. The operation of the retention means in these embodiments is as described in the first aspect of the invention.

In some embodiments, the method further comprises connecting a third cable to a first end of a fourth cable; the installation comprises the third cable, the third cable passing through the opening; the device further comprises the fourth cable, the fourth cable having a second end attached to the tubular body; and the step of inserting the device in the opening in the first direction comprises pulling the third cable in order to insert the device in the opening in the first direction.

The connection of the third cable (e.g. a messenger cable) to the device through the fourth cable facilitates the insertion of the device in the opening in the first direction since this step can be carried out by pulling the third cable. This means that one or more divers or submersible devices are not needed to carry out the step of inserting the device through the opening.

In some embodiments, the method further comprises attaching a third cable to the tubular body, the third cable passing through the opening; and the step of inserting the device in the opening in the first direction comprises pulling the third cable in order to insert the device in the opening in the first direction.

The connection of the third cable (e.g. a messenger cable) to the tubular body (at an attachment point thereof) facilitates the insertion of the device in the opening in the first direction since this step can be carried out by pulling the third cable. This means that one or more divers or submersible devices are not needed to carry out the step of inserting the device through the opening.

In some embodiments, a submersible device configured to install submarine lines carries out at least one of the following steps: connecting the first end of the first cable to the line, connecting the second cable to the second end of the first cable, and connecting the third cable to the first end of the fourth cable.

In some embodiments, the retention means comprise one or more pivotable stops; and each of the one or more pivotable stops pivots to a first position that prevents the movement of the tubular body in the opening at least in the second direction when the tubular body receives the line.

The actuation of the retention means by the line to prevent the movement of the tubular body at least in the second direction comprises moving and, therefore, pivoting the one or more pivotable stops to the first position.

In some embodiments, each of the one or more pivotable stops comprises a spring that keeps the pivotable stop in a second position that enables the movement of the tubular body in the opening at least in the second direction when the tubular body does not receive the line.

In some embodiments, the retention means comprise one or more elements with at least one frustoconical portion adapted to prevent the movement of the tubular body in the opening at least in the second direction when the frustoconical portion is completely inserted in the opening and the tubular body receives the line.

The actuation of the retention means by the line to prevent the movement of the tubular body in the second direction comprises lowering the tubular body and, therefore, the device so that the at least one frustoconical portion comes into contact with the surface on which the opening is formed.

In some embodiments, the device further comprises a (first) tubular line protector (e.g. a bend restrictor, a bend stiffener or an anti-friction protector known in the state of the art) adapted to receive the line, the (first) tubular line protector being coupled to the first end of the tubular body. In some embodiments, the device further comprises a (first or second) tubular line protector (e.g. a bend restrictor, a bend stiffener or an anti-friction protector known in the state of the art) adapted to receive the line, the (first or second) tubular line protector being coupled to the second end of the tubular body.

In some embodiments, the device for protecting a line is a submersible device.

In some embodiments, the line is a submarine line.

In some embodiments, the installation is an installation in a marine environment.

In some embodiments, the installation comprises a wind turbine, the wind turbine comprising a foundation comprising the opening.

Advantages similar to those described for the first aspect of the invention may also be applicable to the third aspect of the invention.

A fourth aspect of the invention presents a device for protecting a line comprising:
a tubular body adapted to receive the line and to insert the tubular body in an opening in a first direction, the tubular body comprising a first end and a second end;
retention means coupled to the tubular body, the retention means being adapted to prevent the movement of the tubular body in the opening in a second direction, the second direction being opposite the first direction; and
a first cable that at least extends through the inside of the tubular body from the first end of the tubular body to the second end of the tubular body, the first cable comprising a first end adapted to connect to the line.

The retention means make it possible to retain the device in the opening once the tubular body has been inserted in said opening. The retention means may be known in the state of the art, for example the retention means described in one of the patent documents GB-2463940-A and WO-2016128739-A1. The retention carried out by the retention means can be permanent, that is, in order to remove the device (from the opening) the retention means must be deformed, disassembled and/or broken, or require one or more apparatuses that actuate the retention means in order to release them.

The retention means are also adapted to enable the movement of the tubular body in the opening in the first direction such that the tubular body (and therefore the device) can be partially inserted in the opening. Or in other words, the retention means are also adapted to prevent the complete insertion of the tubular body in the opening in the first direction.

The first cable is made to pass through the tubular body and enables the insertion of the line in the tubular body. The first cable can be pulled at a second end thereof, whether directly (by pulling the first cable itself) or indirectly (by pulling an additional cable that can be connected to the second end of the first cable).

In some embodiments, the retention means are also adapted to retain the first cable in the tubular body until the tubular body is inserted in the opening.

The retention means, by means of the one or more locking stops, retain the first cable in the tubular body until the one or more locking stops comes into contact with and presses on the surface on which the opening is formed. In some of these embodiments, the retention means further comprise, for each of the one or more locking stops, a support element and a spring. The spring is coupled at a first end to the support element, and at a second end to the corresponding locking stop. The spring is adapted to work under compression, that is, after withstanding a compression stress, the spring returns to its initial condition. The one or more locking stops is mobile and is adapted to slide on the surface of the tubular body.

One or more retention cables are connected to the first cable and, in a removable manner, to a locking stop. The one or more retention cables prevents the first cable from being removed from the device while it is connected to the locking stop, that is, retained by the locking stop. When the one or more locking stops come into contact with the surface on which the opening is formed during the insertion of the device in the opening, the one or more locking stops moves on the surface of the tubular body while it compresses the corresponding spring. The one or more locking stops can slide until the spring prevents it due to the force that it produces in order to try to return to its initial condition or until it makes contact with the support element, which is fixed in the tubular body. As the one or more locking stops slides, the one or more retention cables is released from the one or more locking stops making the movement of the first cable to which the one or more retention cables is connected possible.

When the first cable is pulled while it is retained by the retention means, the first cable pulls the device, and the line if it is connected to the first end of the first cable. Upon pulling the device, it may be inserted in the opening. Upon inserting the device in the opening, when the one or more locking stops of the retention means comes into contact with the surface on which the opening is formed, the one or more locking stops moves and releases the first cable. Therefore, by pulling the first cable again, the line is inserted (the line being connected to the first cable) in the tubular body since the tubular body has already been inserted up to where the one or more locking stops enables.

In some other embodiments, the retention means comprise one or more retention cables that are attached to the tubular body and are adapted to be broken when they are pulled with a force greater than a predetermined value.

Given that the tensile strength that is applied to break the one or more retention cables can be high, since the join with the one or more retention cables is between the first cable and the tubular body, the tensile strength is not applied directly on the line.

In some embodiments, the tubular body comprises an attachment point for a second cable.

A second cable can be used to attach to the tubular body and insert the tubular body and, therefore, the device in the opening pulling the second cable. The second cable can form part of the installation that has an opening through which the line is to be inserted. In this case, the second cable passes through the opening, such that if a first end of the second cable is intended to be attached to the attachment point, the tubular body is inserted in the opening by pulling the second cable, for example from a second end thereof.

In some embodiments, the device further comprises the second cable, the second cable being attached to the attachment point and adapted to be pulled.

In some embodiments, the device further comprises a (first) tubular line protector (e.g. a bend restrictor, a bend stiffener or an anti-friction protector known in the state of the art) adapted to receive the line, the (first) tubular line protector being coupled to the first end of the tubular body. In some embodiments, the device further comprises a (first or second) tubular line protector (e.g. a bend restrictor, a bend stiffener or an anti-friction protector known in the state of the art) adapted to receive the line, the (first or second) tubular line protector being coupled to the second end of the tubular body.

In some embodiments, the device for protecting a line is a submersible device.

In some embodiments, the line is a submarine line.

A fifth aspect of the invention presents a system comprising:
an installation comprising an opening; and
a device for protecting a line according to the fourth aspect of the invention, the device being partially inserted in the opening of the installation.

In some embodiments, the installation is an installation in a marine environment.

In some embodiments, the installation comprises a wind turbine, the wind turbine comprising a foundation comprising the opening.

Advantages similar to those described for the fourth aspect of the invention are also applicable to the fifth aspect of the invention.

A sixth aspect of the invention presents a method for inserting a line in an opening of an installation comprising:
providing a device for protecting the line, the device comprising:
   a tubular body adapted to receive the line and to insert the tubular body in an opening in a first direction, the tubular body comprising a first end and a second end; and
   retention means coupled to the tubular body, the retention means being adapted to prevent the movement of the tubular body in the opening in a second direction, the second direction being opposite the first direction;
introducing a first cable inside the tubular body, the first cable at least extending from the first end of the tubular body to the second end of the tubular body, the first cable comprising a first end adapted to connect to the line;
connecting the first end of the first cable to the line;
inserting the device in the opening in the first direction; and
inserting the line in the device by means of the first cable.

The insertion of the line in the opening is carried out by inserting the line in the device for protecting the line, which is inserted in the opening.

The retention means make it possible to retain the device in the opening once the tubular body has been inserted in said opening. The retention means may be known in the state of the art, for example the retention means described in one of the patent documents GB-2463940-A and WO-2016128739-A1. The retention carried out by the retention means can be permanent, that is, in order to remove the device (from the opening) the retention means must be deformed, disassembled and/or broken, or require one or more apparatuses that actuate the retention means in order to release them.

The retention means are also adapted to enable the movement of the tubular body in the opening in the first direction such that the tubular body (and therefore the device) can be partially inserted in the opening. Or in other words, the retention means are also adapted to prevent the complete insertion of the tubular body in the opening in the first direction.

In some embodiments, inserting the line in the device by means of the first cable comprises inserting the line in the device by pulling the first cable.

By pulling on a second end of the first cable, and given that the first cable extends through the inside of the tubular body, the line is pulled and, therefore, inserted in the device.

In some embodiments, the first cable passes through the opening; and inserting the device in the opening in the first direction comprises inserting the device in the opening in the first direction by pulling the first cable.

In some embodiments, the first cable comprises a second end adapted to connect to a first pull cable; the method further comprises connecting a second end of the first cable to the first pull cable; and inserting the line in the device by means of the first cable comprises inserting the line in the device by pulling the first pull cable.

In some embodiments, the first pull cable passes through the opening; and inserting the device in the opening in the first direction comprises inserting the device in the opening in the first direction by pulling the first pull cable.

In some embodiments, the method further comprises connecting the first cable to the retention means in a removable manner; the retention means are also adapted to retain the first cable in the tubular body until the tubular body is inserted in the opening; the step of inserting the device in the opening in the first direction comprises pulling the first cable in order to insert the device in the opening in the first direction until the retention means come into contact with the opening and the first cable disconnects from the retention means.

The connection of the first cable to the line and to the device (by means of the retention means) facilitates the insertion of the device in the opening and the insertion of the line in the device since these steps can be carried out sequentially by pulling the first cable. When the retention means release the first cable, which takes place once the device has been inserted through the opening by pulling the first cable, pulling the first cable or a first pull cable connected to the first cable again causes the line to be inserted in the device.

The removable connection is carried out by means of one or more retention cables that are adapted to be broken when they are pulled with a force greater than a predetermined value, or that are configured to be released by the retention means when the device is inserted in the opening in the first direction.

In some embodiments, the tubular body further comprises an attachment point for a second cable; the method further comprises attaching a second cable to the attachment point; and inserting the device in the opening in the first direction comprises inserting the device in the opening in the first direction by means of the second cable.

In some embodiments, the second cable passes through the opening; and inserting the device in the opening in the first direction by means of the second cable comprises inserting the device in the opening in the first direction by pulling the second cable.

In some embodiments, the second cable is attached to the attachment point at a first end of the second cable; the method further comprises connecting a second end of the second cable to a second pull cable, the second pull cable passing through the opening; and inserting the device in the opening in the first direction by means of the second cable comprises inserting the device in the opening in the first direction by pulling the second pull cable.

In some embodiments, the device further comprises a (first) tubular line protector (e.g. a bend restrictor, a bend stiffener or an anti-friction protector known in the state of the art) adapted to receive the line, the (first) tubular line protector being coupled to the first end of the tubular body. In some embodiments, the device further comprises a (first or second) tubular line protector (e.g. a bend restrictor, a bend stiffener or an anti-friction protector known in the state of the art) adapted to receive the line, the (first or second) tubular line protector being coupled to the second end of the tubular body.

Advantages similar to those described for the fourth aspect of the invention may also be applicable to the sixth aspect of the invention.

### BRIEF DESCRIPTION OF THE DRAWINGS

As a complement to the description, and for the purpose of helping to make the characteristics of the invention more readily understandable, in accordance with various practical embodiments thereof, said description is accompanied by a set of figures constituting an integral part thereof, which by way of illustration and not limitation represent the following:
Figure 1 shows a portion of an installation with an opening, and a line inserted in the opening through a protection device.
Figures 2 and 3 show devices for protecting a line according to embodiments of the invention.
Figures 4A-4B, 5A-5B, 6A-6C, 7 and 8A-8B partially show devices for protecting a line with retention means, in different positions, according to embodiments of the invention.
Figure 9 shows a device for protecting a line and a line before being inserted in an opening of an installation.
Figure 10 shows retention means according to embodiments of the invention.
Figure 11 shows a device for protecting a line and a line before being inserted in an opening of an installation.

### DESCRIPTION OF EMBODIMENTS OF THE INVENTION

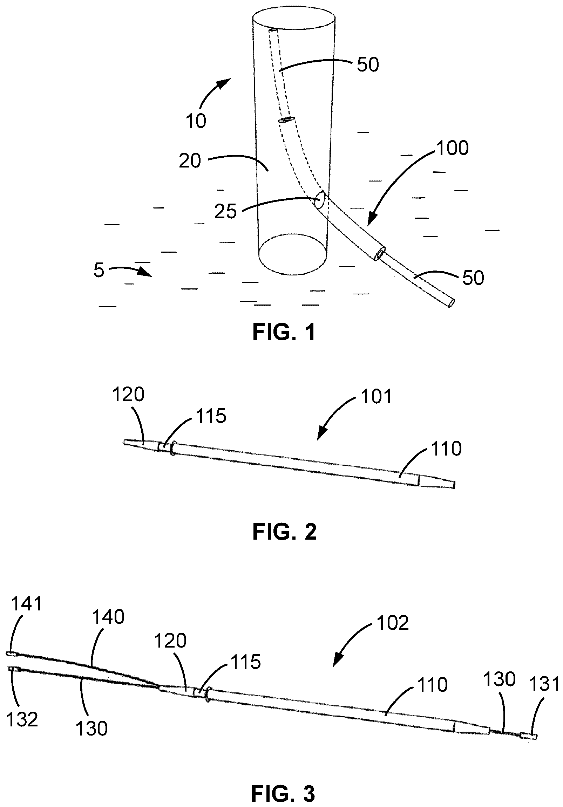

Figure 1 shows a portion of an installation 10 that comprises a structure 20, such as a foundation in the ground 5. There are openings 25 formed in the structure 20 through which a line 50 must be inserted.

A device 100 for protecting a line is inserted in the opening 25; a portion of the device 100 is shown only for illustrative purposes with dashed lines that show that this portion is inserted in the opening 25, in particular it is inside the structure 20. In some cases, the opening 25 can provide access to a cavity, while in some other cases, the opening 25 is simply a hole formed on the surface that does not provide access to any cavity.

In the device 100 there is a line 50 inserted that passes through the entire length of the device 100. A first portion (represented with dashed lines only for illustrative purposes) of the line 50 is not inside the device 100 but is inserted in the opening 25, a second portion of the line 50 is inside the device 100 and is also inserted in the opening 25, a third portion of the line 50 is inside the device 100 and is not inserted in the opening 25, and a fourth portion of the line is not inside the device 100 nor inserted in the opening 25.

The installation 10 can be a wind turbine in an offshore wind farm, and the structure 20 (e.g. foundation of the wind turbine) can be underwater; in this example, the ground 5 is the sea floor and the line 50 is a submarine line.

Figure 2 shows a device 101 for protecting a line according to an embodiment of the invention.

The device 101 comprises a tubular body 110 adapted to receive a line, retention means 115 coupled to the tubular body 110, and a tubular line protector 120 adapted to receive a line and coupled to a first end of the tubular body 110. The tubular body 110 protects the line it receives from possible abrasions.

Figure 3 shows a device 102 for protecting a line according to another embodiment of the invention.

The device 102 comprises the tubular body 110, retention means 115, the tubular line protector 120, a first cable 130, and a second cable 140. The first cable 130 extends at least from a first end of the tubular body 110 to a second end of the tubular body 110, and passes through the tubular body 110. A first end 131 of the first cable 130 is adapted to connect to a line (not shown), and a second end 132 of the first cable 130 is adapted to connect to another cable (not shown) with which it is possible to pull the first cable 130 when the first cable 130 is connected, for example, to the line and thus insert the line in the device 102. A first end of the second cable 140 is attached to the device 101, and a second end 141 of the second cable 140 is adapted to connect to another cable (not shown) with which it is possible to pull the second cable 140 and thus insert the device 102 in the opening (for example, the opening 25 in figure 1).

The devices 101, 102 can be used instead of the device 100 in figure 1.

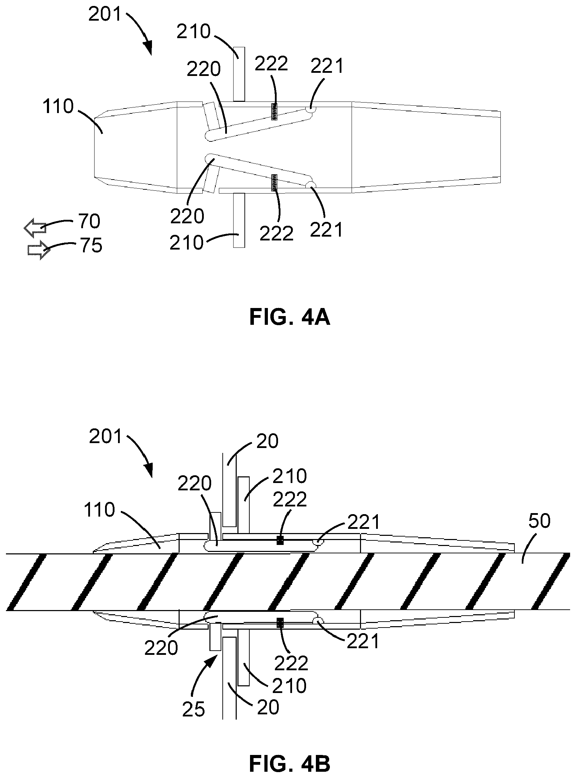

Figures 4A-4B show retention means 201 coupled to a tubular body 110 of a device for protecting a line.

The retention means 201 comprise locking stops 210 that protrude from the tubular body 110 in order to limit the insertion of the tubular body 110 and, therefore, of the device through the opening 25 of the structure 20 in an insertion direction 70 (represented with an arrow only by way of illustration and clarification). The retention means 201 further comprise pivotable stops 220, for example brackets or plates, with respective pivots 221 that make it possible for the pivotable stops 220 to be actuated between a position that does not block movement (the position shown in figure 4A) in a removal direction 75 (shown with an arrow only by way of illustration and clarification), and a position that blocks movement (position shown in figure 4B) in the removal direction 75. The retention means further comprise a compression spring 222 for each pivotable stop 220. Each compression spring 222 is coupled to a pivotable stop 220 and to the tubular body 110.

The compression springs 222 produce a force to keep the pivotable stops 220 in the position of figure 4A. When the line 50 is received in the tubular body 110 (according to that shown in figures 4A-4B, the line 50 is also received in the insertion direction 70), the line 50 actuates the locking stops 220 by pushing them and making them pivot; in this way, the locking stops 220 protrude from the tubular body 110 (figure 4B) through holes and prevent the movement of the tubular body 110 in the removal direction 75. When the line 50 is removed, the compression springs 222 return to their initial condition, in turn moving the pivotable stops 220 to the position in figure 4A.

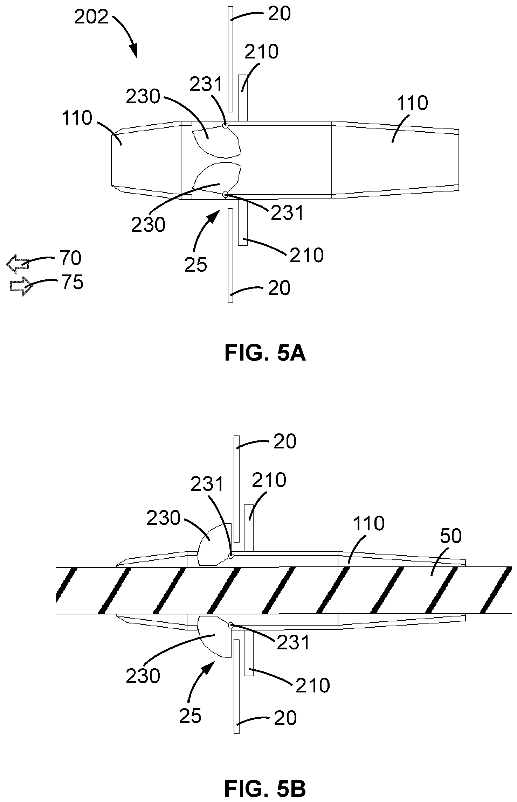

Figures 5A-5B show retention means 202 coupled to a tubular body 110 (partially shown only for illustrative purposes) of a device for protecting a line.

The retention means 202 comprise locking stops 210, and pivotable stops 230, for example plates, with respective pivots 231 that make it possible for the pivotable stops 230 to be actuated between a position that does not block movement (the position shown in figure 5A) in the removal direction 75, and a position that blocks movement (position shown in figure 5B) in the removal direction 75.

When the line 50 is received in the tubular body 110 (according to that shown in figures 5A-5B, the line 50 is also received in the insertion direction 70), the line 50 actuates the pivotable stops 230 by pushing them and making them pivot; in this way, the pivotable stops 230 protrude from the tubular body 110 (figure 5B) through holes and preventing the movement of the tubular body 110 in the removal direction 75. When the line 50 is removed from the tubular body 110, by pulling the tubular body 110 in the removal direction 75, the pivotable stops 230 tilt and are inserted inside the tubular body 110, thereby enabling the removal of said tubular body 110.

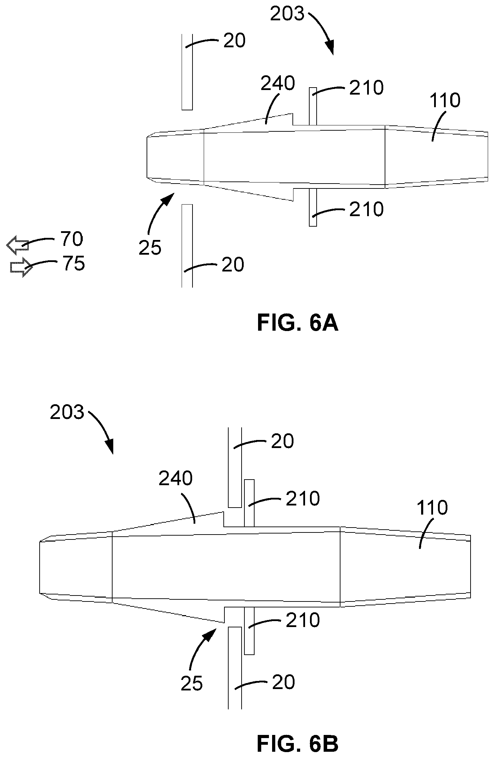

Figures 6A-6C show retention means 203 coupled to a tubular body 110 (partially shown only for illustrative purposes) of a device for protecting a line.

The retention means 203 comprise locking stops 210, and an element 240 with a frustoconical portion.

Figure 6A shows the tubular body 110 with the retention means 203 before the insertion thereof through the opening 25.

Figure 6B shows the tubular body 110 with the retention means 203 once inserted through the opening 25 up to the locking stops 210. Given that the tubular body 110 has not yet received the line 50 when it is inserted in the opening 25, the retention means 203 do not prevent the movement of the tubular body 110 in the removal direction 75.

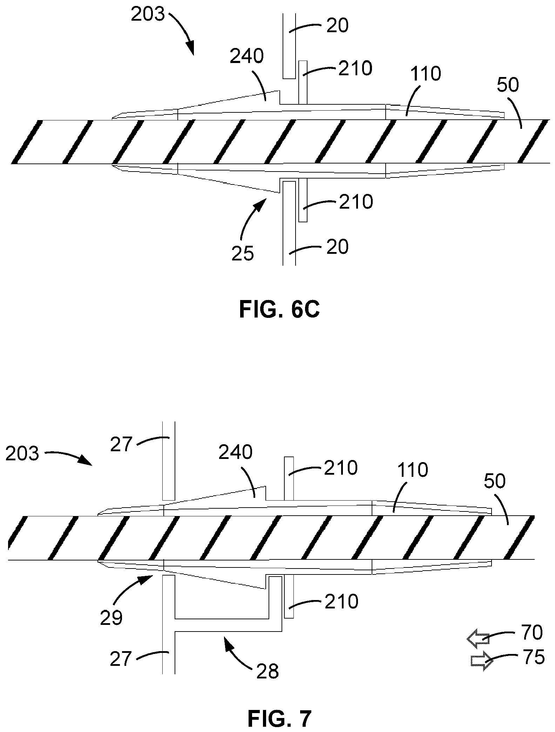

Figure 6C shows the tubular body 110 with retention means 203 once inserted through the opening 25, as shown in figure 6B, but once the line 50 is inserted in the tubular body 110. The line 50, due to its weight, lowers the tubular body 110 with the retention means 203, such that the element 240 with the frustoconical portion comes into contact with the structure 20 of the opening 25, thereby preventing the movement of the tubular body 110 in the removal direction 75. By removing the line 50, the tubular body 110 ceases to support the weight of the line 50, thereby freeing movement of the tubular body 110 in the removal direction 75.

Figure 7 shows the retention means 203 coupled to the tubular body 110 (partially shown only for illustrative purposes) of a device for protecting a line.

Unlike figures 6A-6C, figure 7 shows the tubular body 110 with the retention means 203 inserted in a projection 28 of a structure 27 that forms an opening 29.

One of the locking stops 210 comes into contact with the projection 28 and prevents the complete insertion of the tubular body 110 in the opening 29 in the insertion direction 70. The element 240 with the frustoconical portion prevents the movement of the tubular body 110 in the removal direction 75 when it is fitted in the projection 28 when the line 50 is received.

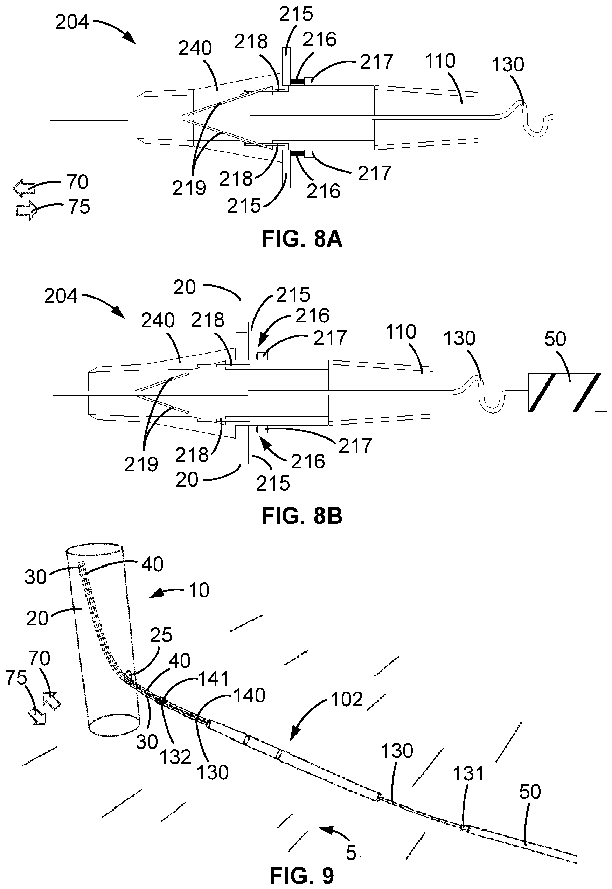

Figures 8A-8B show retention means 204 coupled to a tubular body 110 (partially shown only for illustrative purposes) of a device for protecting a line.

The retention means 204 comprise the element 240 with a frustoconical portion, locking stops 215, compression springs 216, support elements 217, extensions 218 of the locking stops 215, and retention cables 219. The locking stops 215 protrude from the tubular body 110 in order to limit the insertion of the tubular body 110 and, therefore, of the device through the opening 25 of the structure 20 in the insertion direction 70. Said locking stops 215 are mobile and can be moved on the surface of the tubular body 110, in particular they can move between the position shown in figure 8A (where in this example they come into contact with the element 240 with the frustoconical portion), and the position shown in figure 8B (where they come into contact with the support elements 217, which are fixed on the surface of the tubular body 110). The compression springs 216 are coupled to the locking stops 215 and to the support elements 217. The extensions 218 that retain the retention cables 219 are also coupled to the locking stops 215.

The first cable 130 extends through the tubular body 110. A first end of the first cable 130 may be connected to the line 50 (in figure 8B it is shown connected to the line 50) and a second end of the first cable 130 may be connected to another cable, such as for example a messenger cable (not shown). The first cable 130 is connected (at least at one point between the ends of the first cable 130) to the retention cables 219.

To insert the device in the opening 25, the second end of the first cable 130 can be pulled, for example by pulling the other cable connected to this second end; the other cable must have been passed through the opening 25 so that when this cable is pulled, both the first cable 130 and the device and the line 50 are pulled for insertion through the opening 25.

When the device is inserted in the opening 25, and as shown in figure 8B, the locking stops 215 move towards the support elements 217, compressing the compression springs 216 when the locking stops 215 come into contact with the structure 20. The locking stops 215 prevent the movement of the device in the insertion direction 70 when it reaches its maximum displacement, which is limited by the compression springs 216 and the support elements 217. With the movement of the locking stops 215, the extensions 218 also move, thereby releasing the retention cables 219 by means of which the first cable 130 was joined to the device. Given that the first cable 130 remains connected to the line 50, pulling the cable connected to the first cable 130 inserts the line 50 in the tubular body 110 when the device has already been inserted in the opening 25.

In the case that the line 50 is inserted in the opening 25 through one of the devices of the present disclosure and the line 50 deteriorates or breaks (for example, in a portion of the line that is not protected by the protection device), the line 50 can be removed from the devices in order to replace them. When the line 50 is removed, the retention means cease to prevent the removal of the devices, meaning that the device can be removed and configured to receive new lines, and insert both the devices and the new lines following the same method described.

Any of the retention means 201-204 of the figures 4A-4B, 5A-5B, 6A-6C, 7 and 8A-8B can be used as retention means 115 of the devices 101, 102 of figures 2 and 3.

Figure 9 shows the device 102 for protecting a line and the line 50 before being inserted in the opening 25 of the installation 10.

The device 102 comprises retention means (not shown), the first cable 130 and the second cable 140. The first cable 130, which is made to pass through the device 102 and has a length greater than the length of the tubular body of the device 102, is connected to the line 50 at the first end 131, and to a third cable 30 at the second end 132. The second cable 140 is attached to the device 102 at the first end, and to a fourth cable 40 at the second end.

The installation 10 comprises the third cable 30 and the fourth cable 40. The third cable 30 and the fourth cable 40 pass through the opening 25. The device 102 is inserted in the opening 25 in the insertion direction 70 by pulling the fourth cable 40 from the installation 10. Once the device 102 is inserted in the opening 25, the line 50 is inserted in the device 102 by pulling the third cable 30 from the installation 10; in this way, the line 50 actuates the retention means of the device 102 to prevent the movement of the device 102 in the removal direction 75.

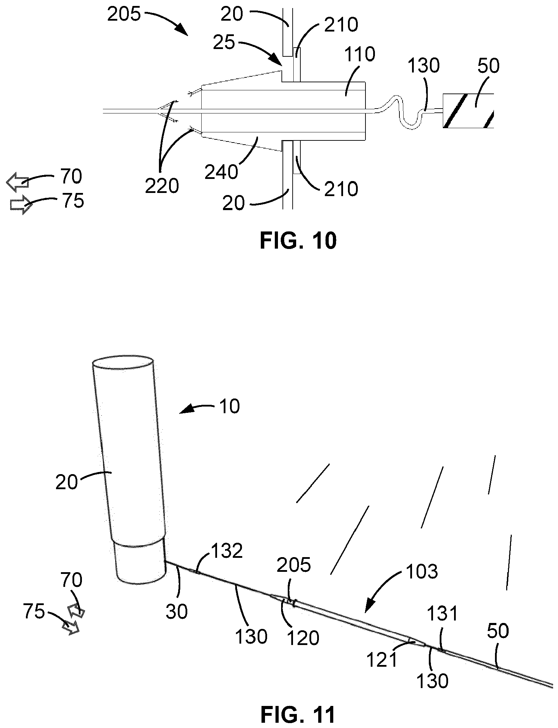

Figure 10 show retention means 205 coupled to a tubular body 110 (partially shown only for illustrative purposes) of a device for protecting a line.

The retention means 205 comprise the element 240 with a frustoconical portion, the locking stops 210, and retention cables 220 attached to the tubular body 110.

The first cable 130 extends through the tubular body 110. A first end of the first cable 130 may be connected to the line 50 and a second end of the first cable 130 may be connected to another cable, such as for example a messenger cable (not shown). The first cable 130 is connected (at least at one point between the ends of the first cable 130) to the retention cables 220.

To insert the device in the opening 25, the second end of the first cable 130 can be pulled, for example by pulling the other cable connected to this second end; the other cable must have been passed through the opening 25 so that when this cable is pulled, the first cable 130 and the device and the line 50 are pulled for insertion through the opening 25. Once the locking stops 210 come into contact with the structure 20, upon continuing to pull the cable, the retention cables 220 break (they are shown breaking in figure 10), thereby enabling the line 50 to be inserted inside the device while the cable continues to be pulled.

Figure 11 shows a device 103 for protecting a line and the line 50 before being inserted in the opening 25 of the installation 10.

The device 103 comprises a tubular body, the first cable 130, the retention means 205, a first tubular protector 120 at a first end of the tubular body, and a second tubular protector 121 at a second end of the tubular body. The first cable 130, which is made to pass through the device 103 and has a length greater than the length of the tubular body of the device 103, is connected to the line 50 at the first end, to a second cable 30 at the second end 132, and to the retention cables 220 of the retention means 205.

The installation 10 comprises the second cable 30, which passes through the opening 25. The device 103 is inserted in the opening 25 in the insertion direction 70 by pulling the second cable 30 from the installation 10. Once the device 103 is inserted in the opening 25, the retention cables 220 break, meaning that the line 50 is inserted in the device 103 by pulling the second cable 30 from the installation 10; in this way, the line 50 actuates the retention means of the device 103 to prevent the movement of the device 103 in the removal direction 75.

Despite having used the terms first, second, third, etc. in the present text to describe different elements and/or devices, it must be understood that the elements and/or devices should not be limited by these terms since the same are only used to differentiate an element and/or device from others. For example, a first cable could also be referred to as second cable, and the second cable could also be referred to as first cable; or a first direction could be referred to as second direction and vice versa.

In this text, the word "comprises" and its variants (such as "comprising", etc.) should not be understood in an exclusive sense, i.e. they do not exclude the possibility of that which is described including other elements, steps, etc.

Also, the invention is not limited to the specific embodiments described herein, but rather encompasses the variations that one skilled in the art could make (e.g. in terms of choice of materials, dimensions, components, design, etc.), within the scope of what may be deduced from the claims.

## Claims

1. A device (100-103) for protecting a submarine line (50) comprising:
a tubular body (110) adapted to receive the submarine line (50) and to insert the tubular body (110) in an opening (25, 29) in a first direction (70), the tubular body (110) comprising a first end and a second end; and
retention means (115, 201-205) coupled to the tubular body (110);
wherein the retention means (115, 201-205) are adapted to prevent the movement of the tubular body (110) in the opening (25, 29) in a second direction (75) when the tubular body (110) receives the submarine line (50), the second direction (75) being opposite the first direction (70); and
wherein the retention means (115, 201-205) are also adapted to enable the movement of the tubular body (110) in the opening (25, 29) at least in the second direction (75) when the tubular body (110) does not receive the submarine line (50).

2. The device (100-103) of claim 1, wherein the retention means (115, 201, 202) comprise one or more pivotable stops (220, 230); and wherein each of the one or more pivotable stops (220, 230) pivots to a first position that prevents the movement of the tubular body (110) in the opening (25, 29) in the second direction (75) when the tubular body (110) receives the submarine line (50).

3. The device (100-102) of claim 2, wherein each of the one or more pivotable stops (220) comprises a spring (222) that keeps the pivotable stops (220) in a second position that enables the movement of the tubular body (110) in the opening (25, 29) at least in the second direction (75) when the tubular body (110) does not receive the submarine line (50).

4. The device (100-103) of claim 1, wherein the retention means (115, 203-205) comprise one or more elements with at least one frustoconical portion (240) adapted to prevent the movement of the tubular body (110) in the opening (25, 29) in the second direction (75) when the frustoconical portion (240) is completely inserted in the opening (25, 29) and the tubular body (110) receives the submarine line (50).

5. The device (102, 103) of any of the preceding claims, further comprising a first cable (130); wherein a first end (131) of the first cable (130) is adapted to connect to the submarine line (50); and wherein the first cable (130) at least extends through the inside of the tubular body (110) from the first end of the tubular body (110) to the second end of the tubular body (110).

6. The device (102, 103) of claim 5, wherein the retention means (115, 204-205) are also adapted to retain the first cable (130) in the tubular body (110) until the tubular body (110) is inserted in the opening (25, 29).

7. The device (102) of any of claims 5-6, wherein the tubular body (110) comprises an attachment point for a second cable (40, 140); and wherein the device (102) preferably further comprises the second cable (140), the second cable (40, 140) being adapted to be pulled and attached to the attachment point.

8. The device (100-103) of any of the preceding claims, further comprising at least one of:
a first tubular line protector (120) adapted to receive the submarine line (50), the first tubular line protector (120) being coupled to the first end of the tubular body (110); and
a second tubular line protector (121) adapted to receive the submarine line (50), the second tubular line protector (121) being coupled to the second end of the tubular body (110).

9. A system comprising:
an installation (10) comprising an opening (25, 29); and
a device (100-103) for protecting a submarine line (50) according to any of claims 1-8, the device (100-103) being partially inserted in the opening (25, 29) of the installation (10).

10. A method for inserting a submarine line (50) in an opening (25, 29) of an installation (10) comprising:
providing a device (100-103) for protecting the submarine line (50), the device (100-103) comprising:
a tubular body (110) adapted to receive the submarine line (50) and to insert the tubular body (110) in the opening (25, 29) in a first direction (70); and
retention means (115, 201-205) coupled to the tubular device (110), the retention means (115, 201-205) being adapted to prevent the movement of the tubular body (110) in the opening (25, 29) in a second direction (75) when the tubular body (110) receives the submarine line (50), and also adapted to enable the movement of the tubular body (110) in the opening (25, 29) at least in the second direction (75) when the tubular body (110) does not receive the submarine line (50), the second direction (75) being opposite the first direction (70);
inserting the device (100-103) in the opening (25, 29) in the first direction (70); and
inserting the submarine line (50) in the device (100-103) when the device (100-103) is inserted in the opening (25, 29), the submarine line (50) actuating the retention means (115, 201-205) to prevent the movement of the tubular body (110) in the second direction (75).

11. The method of claim 10, further comprising:
connecting a first end (131) of a first cable (130) to the submarine line (50); and
connecting a second cable (30) to a second end (132) of the first cable (130);
wherein the device (102, 103) further comprises the first cable (130), the first cable (130) passing through the tubular body (110);
wherein the installation (10) further comprises the second cable (30), the second cable (30) passing through the opening (25, 29); and
wherein the step of inserting the submarine line (50) in the device (102, 103) comprises pulling the second cable (30) in order insert the submarine line (50) in the device (102, 103) when the device (102, 103) is inserted in the opening (25, 29), the submarine line (50) actuating the retention means (115, 201-205) to prevent the movement of the tubular body (110) in the second direction (75).

12. The method of claim 11, further comprising:
connecting the first cable (130) to the retention means (115, 204-205) in a removable manner;
wherein the retention means (115, 204-205) are also adapted to retain the first cable (130) in the tubular body (110) until the tubular body (110) is inserted in the opening (25, 29); and
wherein the step of inserting the device (102, 103) in the opening (25, 29) in the first direction (70) comprises pulling the second cable (30) in order to insert the device (102, 103) in the opening (25, 29) in the first direction (70) until the retention means (115, 204-205) come into contact with the opening (25, 29) and disconnect the first cable (130) from the retention means (115, 204-205).

13. The method of claim 11, further comprising:
connecting a third cable (40) at a first end (141) of a fourth cable (140);
wherein the installation (10) comprises the third cable (40), the third cable (40) passing through the opening (25, 29);
wherein the device (102) further comprises the fourth cable (140), the fourth cable (140) having a second end attached to the tubular body (110); and
wherein the step of inserting the device (102) in the opening (25, 29) in the first direction (70) comprises pulling the third cable (40) in order to insert the device (102) in the opening (25, 29) in the first direction (70).

14. The method of claim 13, wherein a submersible device configured to install submarine lines carries out at least one of the following steps: connecting the first end (131) of the first cable (130) to the submarine line (50), connecting the second cable (30) to the second end (132) of the first cable (130), and connecting the third cable (40) to the first end (141) of the fourth cable (140).

15. The device (100-103) of any of claims 1-8, the system of claim 9, or the method of any of claims 10-14, wherein the retention means (115, 201-205) comprise one or more locking stops (210, 215) adapted to prevent complete insertion of the tubular body (110) in the opening (25, 29) in the first direction (70).
